# EUROPEAN PATENT SPECIFICATION

(11) **EP 1 972 579 B1**
(45) Date of publication and mention of the grant of the patent: **13.01.2010**
(21) Application number: 08152947.1
(22) Date of filing: 18.03.2008
(51) Int. Cl.: B65G 47/84

(54) **Transport system**
Transportsystem
Système de transport

(30) Priority: 20.03.2007 NL 1033567
(43) Date of publication of application: 24.09.2008
(73) Proprietor: Optimus Sorter Holding B.V., 6546 AS Nijmegen (NL)
(72) Inventor: Hendriks, Albertus Cornelis, 6511 VK Nijmegen (NL); de Bruin, Jacobus Johannes Adrianus, 6644 DS Ewijk (NL)
(74) Representative: Hatzmann, Martin

(56) References cited:
- WO-A-02/26602
- US-A- 6 041 909
- US-A1- 2006 207 858

## Description

The invention relates to a transport system.

A known transport system is provided with an endless, movable conveyor. The known conveyor comprises a large number of transport trays, each open at a top for receiving objects, for instance postal items, agricultural products or other objects. The transport system can be utilized in, for instance, a sorting system and/or in a different manner.

With the known conveyor, each transport tray is provided with a slide, movable in transverse direction along an upper surface of the tray. The slide serves for sliding one or more (i.e. each) objects present on the tray from the tray, via an open longitudinal side of the tray, for instance when a desired destination for these objects is reached. For the purpose of operating the slides, the known system is provided with a large number of ejector rods extending in the transverse direction mentioned.

A drawback of the known system is the complexity and relatively large size thereof. These ejector rods for instance take up much space, in particular outside a path of the conveyor, while the operation of the ejector rods necessitates the use of relatively expensive and maintenance demanding operating parts (which furthermore, in turn, take up much space). In addition, the slides and associated ejector rods with operating parts are not well capable of sliding relatively heavy objects (with a weight of, for instance, more than 10 kg) from the transport trays, while under the influence of heavy load, these parts can easily become defective. Another drawback of the known system is that objects can be slid from the tray in only one direction (at least viewed relative to the tray as such). Therefore, the known tray is not very flexibly deployable.

WO02/26602 discloses a positive displacement sorter of the pusher shoe and slat configuration, having a conveying surface and diverter shoes to displace articles laterally on the surface, which corresponds to the preamble of claim 1 and discusses transporting objects.

The object of the present invention is to obviate the drawbacks mentioned. The invention contemplates in particular an improved transport system that is relatively durable and can be designed to be relatively compact.

According to the invention, to this end, a transport system is provided in that the system is provided with at least one object transport unit, guidable by guide means along a transport path, wherein each object transport unit is provided with an object support surface and with an object pusher movable along this support surface, between a first and second position for pushing an object present during use on this surface from this surface, wherein the transport system is provided with object pusher moving means which are designed for moving the object pusher from the first position to the second position, relative to the respective object transport unit, under the influence of a movement of the respective object transport unit along the transport path (for instance along a respective first path section),
the system comprising one or more of:
- tray-shaped object transport units, for instance transport trays; and
- object transport units which each comprise one or two upward reaching upstanding edges, to prevent products from sliding from the transport unit in a direction parallel to a transport direction, according to claim 1.

In this manner, the system can be designed to be compact and durable, while use of a separate ejector rod for each object pusher can be avoided. The inventive concept the invention is based on is, in particular, that movement of the object transport unit can be converted into movement of the associated object pusher, in particular such that the same drive can be used for effecting these movements, at least if desired during use.

These transport units are in particular tray-shaped object transport units, for instance transport trays. According to one elaboration, the object transport units can each comprise, for instance, one or two upward reaching upstanding edges, to prevent products from sliding from the transport unit in a direction parallel to a transport direction. During use, the edges can extend for instance along the objects to be transported.

The objects to be transported can comprise various objects or articles, for instance products, postal items, agricultural products, foodstuffs, boxes, packed objects, product holders, luggage, for instance suitcases and/or other objects.

The transport system provided by the invention can further be utilized, for instance, for bringing objects to desired locations and/or sorting objects, and form part of, for instance, a goods distribution and/or sorting system, a goods dispensing system, and/or be usable in a different manner.

Preferably, the transport system is designed such that the first and second position of an object pusher are interchangeable, viewed relative to the respective object transport unit. In other words: an object pusher can for instance be movable from a first to a second position for pushing an object in a first transverse direction from the respective object transport unit, or vice versa, be movable from said second position to the first position for pushing an object from the transport unit in a second transverse direction, while the second transverse direction is opposite to the first transverse direction. In the latter case, preferably also, suitable object pusher moving means are provided, which are designed for moving the object pusher from the second position to the first position, under the influence of a movement of the respective object transport unit along the transport path (for instance along a respective second path section).

A first position of the object pusher can for instance be near or on a first longitudinal side of the respective object support surface, or near or on a second longitudinal side of the respective object support surface opposite the first longitudinal side.

According to an advantageous elaboration of the invention, each object pusher is simply provided with or coupled to a respective operating part, which operating part is engageable by the object pusher moving means, and is movable from a first to a second operating part position for moving the object pusher, during use, from the first to the second object pusher position, respectively. The object pusher moving means can for instance be brought to a first position for engaging the object pusher operating part, and to a second position where these moving means cannot engage this operating part, during movement of the associated object transport unit.

According to a further elaboration of the invention, the object pusher moving means are provided with one or more first engaging elements that can be brought to a first position in a path of the operating part for engaging this operating part, and to a second position for not engaging this operating part, during movement along the transport path of the respective object transport unit. The first engaging means can for instance be controllable for, at wish, operating an object pusher operating part approaching these engaging means.

It is additionally advantageous when at least one first engaging element is associated with a second engaging element, such that during movement of the object transport unit, a first engaging element located in its first position can move an operating part from the first operating part position to a respective second engaging element, and the second engaging element can take over the operating part from the first engaging element and thereupon move to the second operating part position. Then, a second engaging element needs not be operable or movable and can be designed to be passive, with at least a fixed position relative to the transport path. In a particularly compact design, the engaging elements are below the transport path of each object transport unit, and each object pusher operating element is at a position below a respective transport unit for cooperation with said engaging elements (depending on the position of the engaging elements).

In an advantageous embodiment, the object pusher moving means are designed such that the operating part is released when this operating part has reach the second operating part position, so that the respective transport unit with the operating part can move further along the transport path.

According to one elaboration, the moving means and/or the object pusher may be provided with roller means, wherein the roller means form a stop, with one or more rotatable stop surfaces, for moving the object pusher under the influence of a movement of the respective transport unit.

According to one aspect, it is advantageous when said operating part is provided with one or more respective guide surfaces, and said moving means are provided with one or more respective guide surfaces, wherein the operating part guide surfaces and moving means guide surfaces are designed for mutual cooperation in a moved together position, for moving the object pusher under the influence of the movement of the respective object transport unit, while at least one of the guide surfaces comprises a rollable or rotatable surface, in particular a bearing surface of a bearing roller. In this manner, cooperation between moving means and the operating part entails relatively little friction, and a smooth movement of the object mover can be obtained, also if a relatively heavy object is to be pushed from the transport unit.

According to a preferred embodiment, the operating part comprises a bearing roller, and the object pusher moving means are provided with a guide surface for guiding the bearing roller from the first to the second respective operating part position during a movement of the respective object transport unit, while an axis of rotation of the bearing roller preferably extends substantially at right angles relative to a direction of travel of the respective object transport unit. In this manner, cooperation between the operating part and the object pusher moving means can be effected with relatively little friction, in particular via roller friction. Depending on a position of the object pusher moving means, a guide surface can for instance be present in a path of a bearing roller, during the movement of the associated object transport unit such that the movement of the object transport unit leads to contact between the bearing roller and the guide surface. Under the influence of a further movement of the object transport unit, the bearing roller can roll along the guide surface and carry along the respective object pusher, such that this pusher moves along the object support surface. The configuration of the guide surface can for instance be such that the bearing roller travels a particular advantageous path, for instance for gradually accelerating and/or decelerating the respective object pusher at the start or end, respectively, of the object pusher movement.

The object pusher operating part can also be designed in other manners, and comprise, for instance, a cam that is guidable or slidable with little friction along a guide surface of the object pusher moving means (under the influence of transport unit movement), or in a different manner.

According to a preferred embodiment, each object pusher can reach substantially over the respective object support surface, from a transverse side of the respective object transport unit, while an underside of the transport unit remote from the object support surface is provided with a guide system to which the object pusher is coupled, the arrangement being such that the object pusher is movable relative to the transport unit only between the respective first and second position.

In this manner, a relatively large support surface can be available for holding the objects to be transported. Further, in this manner, the system can be designed to be particularly compact and stable, and relatively heavy objects (preferably with a mass of more than approximately 10 kg) can be transported without problems, and be slidable from the transport unit. The guide system can be designed in different manners, and preferably comprises at least one transverse guide extending below the transport unit, while the object pusher can be integrally provided with a guide means (for instance a rigid guide element) that is guidable by the transverse guide in transverse direction of the transport unit.

Different path sections of the transport path can be provided with various object pusher moving means. For instance, at least a first path section of the transport path can be provided with associated first object pusher moving means, and a second path section with associated second object pusher moving means, wherein the first object pusher moving means can be designed for moving an object pusher of an object transport unit moving at a transport unit speed along the first path section, at a first object pusher speed from the first to the second object pusher position, while the second object pusher moving means can be designed for moving the object pusher of an object transport unit moving at this transport unit speed along the second path section, at a second object pusher speed, while the second object pusher speed differs from the first object pusher speed.

Various object pusher moving means of different path sections can also be designed for indeed moving the object pusher at the same speed, under the influence of transport unit movement at a particular transport unit speed.

It is additionally advantageous when particular object pusher moving means are adjustable for setting an object pusher speed. According to a further elaboration, the object pusher moving means can be designed for moving the object pusher at a substantially constant speed between its first and second position, when the respective object transport unit is moved at a constant speed. In addition, there is an option that the object pusher moving means are designed for gradually accelerating and/or decelerating the object pusher, under the influence of a movement of the respective object transport unit along the transport path.

The object pusher moving means can further for instance be arranged below the path of the object transport unit.

The system can be provided with a drive for moving each object transport unit along the respective path, wherein each object pusher is movable from its first to its second position under the influence of a force applied by this drive, while the drive is preferably arranged at a fixed position relative to the transport path.

According to one elaboration, each object transport unit can be provided with a smooth, preferably substantially horizontal, object support surface.

The object pusher can for instance comprise a substantially rigid and elongated pusher element, for instance push rod or push bar, while the element extends preferably substantially in a direction of travel of the respective object transport unit.

In one elaboration, the transport path comprises an endless path closed upon itself, wherein the system is provided with different transport units that are coupled to each other by means of an endless connecting means.

The invention further provides a method as set out in the features of claim 15. The method for transporting objects, comprising the use of a transport system, for example a system according to the invention, the system being provided with at least one object transport unit guidable along a transport path by guide means, wherein each transport unit is provided with an object support surface and with an object pusher movable along this support surface between a first and second position for pushing an object located, during use, on this surface from this surface, wherein the transport system is provided with object pusher moving means which are designed for moving the object pusher from the first position to the second position, relative to the respective object transport unit, under the influence of a movement of the respective object transport unit along the transport path, is advantageously **characterized in that**
- at least one object transport unit is moved along a transport path;
- an object is borne on an object support surface of the object transport unit; and
- an object pusher of the object transport unit is moved from a first position to the second position for sliding the object from the support surface, while the movement of the object pusher is the direct result of a movement of the respective object transport unit. To this end, a movement of the respective object transport unit is converted into a movement of the object pusher. A said object is carried by only one said transport unit.

In particular, an object is borne, and is in particular held in position, by only one transport unit.

According to one elaboration, the object pusher can then, after reaching the second position, be moved back to the first position.

According to an advantageous elaboration, a first engaging element can be brought, during use, to a first position for engaging an approaching operating part of an object pusher of an object transport unit approaching this engaging element. The object transport unit can approach the first engaging element and move therealong. The first engaging element can engage the operating part of the object pusher and thereby move the object pusher from the first object pusher position in the direction of the second object pusher position. It is then further advantageous when the first engaging element can be brought to a second position for not engaging an approaching operating part of an object pusher of an object transport unit approaching this engaging element, so that the object transport unit can approach the first engaging element and can move therealong, without the first engaging element engaging the operating part of the object pusher, so that the object pusher remains in its first position.

The invention further discusses a transport system control, provided with, for instance, at least one of control hardware and control software, which control is designed for carrying out a method according to the invention. The control may comprise a suitable computer or controller unit, or form part thereof. The control can further comprise, for instance, program codes which can be read and executed by suitable hardware, for making the hardware suitable for carrying out the method.

Further elaborations of the invention are described in the subclaims. Presently, the invention will be described on the basis of an exemplary embodiment and the drawing. In the drawing:
Fig. 1 shows a perspective top plan view of a part of an exemplary embodiment;
Fig. 2 shows a perspective bottom view of the part represented in Fig. 1;
Fig. 3 shows a bottom view of a transport unit of the exemplary embodiment;
Fig. 4 shows a side view of the transport unit represented in Fig. 3;
Fig. 5 schematically shows a top plan view of a part of the exemplary embodiment, with the transport unit when approaching object pusher moving means and provided with an object;
Fig. 6 schematically shows a side view of the part represented in Fig. 5, after delivery of the object, while the transport unit has passed the object pusher moving means;
Figs. 7A, 7B, 7C show three successive positions of the transport unit and respective object pusher, with the object pusher moving means in a first position;
Figs. 8A, 8B, 8C show three successive positions of the transport unit and respective object pusher, with the object pusher moving means in a second position; and
Figs. 9A, 9B, 9C show three alternative embodiments of a part of the transport system.

In this patent application, identical or corresponding features are indicated with identical or corresponding reference numerals.

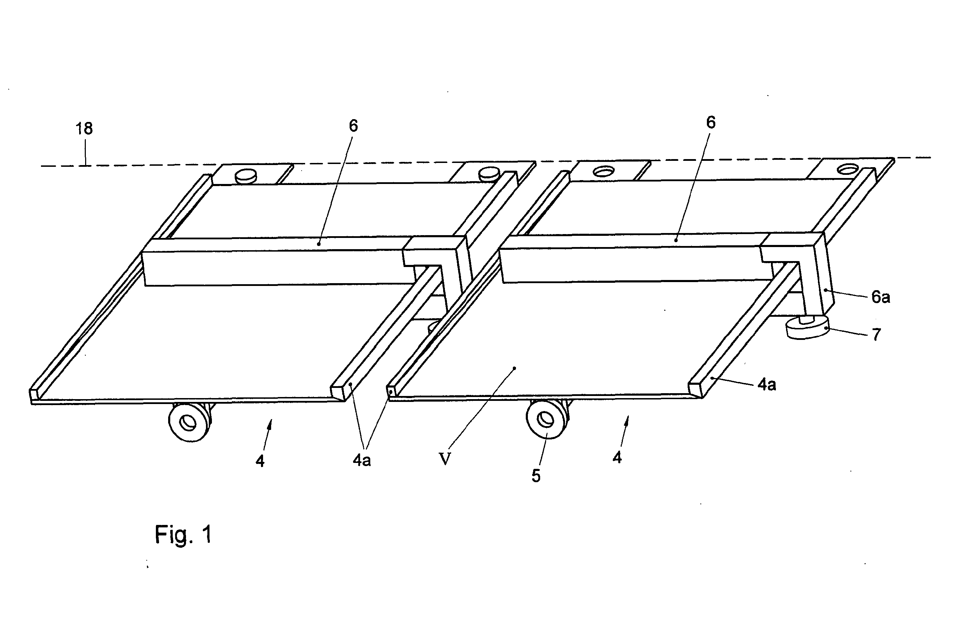

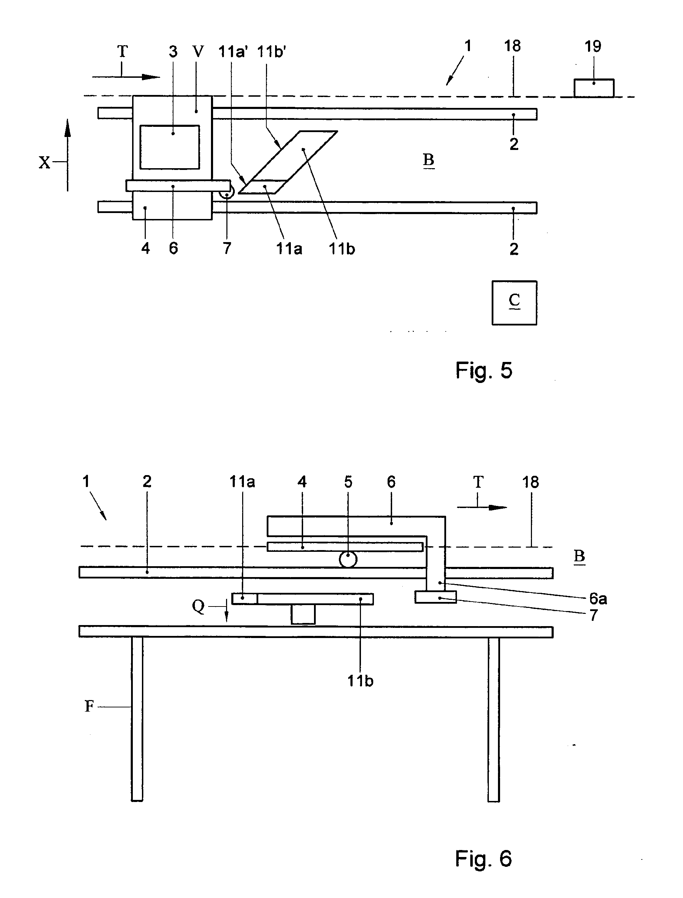

Figs. 1- 8 schematically show a transport system 1, which is provided with one or more, and preferably several object transport units 4 (two of these units 4 are represented in Figs. 1 - 2), guidable by (passive) guide means 2 along a transport path. A support construction F may be provided (see Fig. 6) for supporting the system.

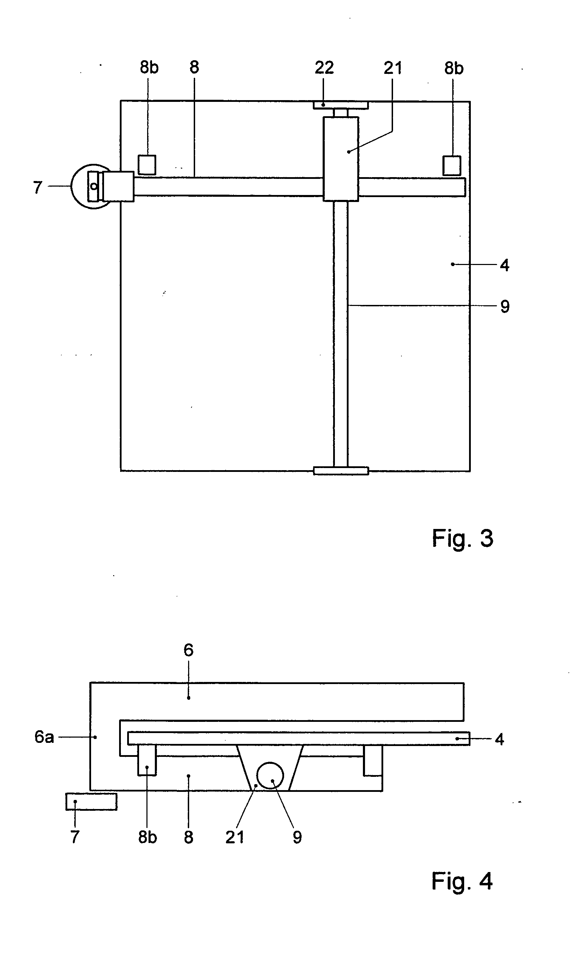

The system can be designed in various variants, and be designed for transporting various objects. In a further elaboration, the transport path, of which each time only a part is represented (see Fig. 4 - 8), can comprise an endless path B, closed upon itself.

The guide means 2 can be designed in different manners, comprise, for instance, guide elements extending along the path B, rails and/or the like, or be designed otherwise. In the exemplary embodiment, the guide means are provided with parallel, spaced apart profile parts or rail parts 2. Alternatively, for instance only one (rail) guide is provided for guiding the transport units 4.

Preferably, the guide means 2 are designed for guiding each transport unit 4 adjacent or along a longitudinal side of this unit, as is the case in the present exemplary embodiment (in the exemplary embodiment, such a longitudinal side of a transport unit extends substantially in longitudinal direction, parallel to the transport path B). The guide means 2 can be attached to the optional support construction F of the system by means of suitable frame means (not represented). The guide means 2 are preferably designed for guiding each transport unit 4 adjacent or along each longitudinal side of this unit, so that a particularly stable transport of objects and a good transport unit guiding can be achieved.

Each transport unit 4 may for instance be slidable along the path B, but is preferably rollable along this path B in a desired transport direction. In the latter case, rolling means can for instance be provided, for moving the transport unit in one or more desired transport directions (a possible transport direction is represented in the Figures with arrow T). In the present exemplary embodiment, each transport unit 4 is provided with one or more guide wheels 5 (in Figs. 1- 2, each time, only one is indicated per unit 4) which can cooperate with the guide means 2, in particular roll therealong, for rolling the transport unit 4 along the path B. Preferably, the guide means 2 can support the transport units 4, for instance via such guide wheels 5 so that relatively heavy objects can be borne by the transport units 4.

Various means can be provided for moving the transport units 4 along the path B. Each transport unit can for instance be provided with a suitable drive, for moving this unit. In addition, means may be provided for moving the transport units along the path B while utilizing electromagnetic forces.

Further, a drive 19 may be provided for advancing one (or more) drive element(s) 18 extending along the path B, while each transport unit 4 is coupled to the drive element 18 so as to be pulled along the path B by this element. Such a drive element is schematically represented in dotted lines 18 in Figs. 1, 5 and 6. The drive element can for instance comprise a suitable chain, cord, belt, toothed belt, wire, strip and/or other suitable drive means. The drive element 8 can for instance comprise and endless element closed upon itself, when the path is an endless path B. The system can be provided with suitable guide means (not represented) for guiding the drive element as such along the path B. The drive element 18 can further be designed for keeping each transport unit 4 in a suitable transport position relative to the (passive) transport unit guide means 2 (for instance a substantially horizontal position, as in Figs. 5 - 6); the drive element 18 can then also be considered as an active transport unit guide means.

The drive 19, schematically drawn in Fig. 5, can further be designed in different manners such that the drive can move the drive element for moving transport units 4 coupled to that element. The drive is preferably arranged at a fixed position relative to the transport path B.

With the present system, the different transport units 4 are coupled to each other in particular by means of an endless connecting means, comprising a drive element 19 mentioned. The transport units 4 can thus be moved at the same speed along the path, in a respective transport direction T. In this manner the system can be designed to be relatively simple and durable, and preferably with only one drive 19 for moving all transport units 4 simultaneously along the path B. In an alternative embodiment, the transport units are movable along the path in a mutually independent manner, and can then adopt mutually different speeds.

Each transport unit 4 can be designed in different manners for carrying one or more objects 3, and comprise, for instance, a transport tray or transport trolley, object carrier or the like. Each object transport unit 4 can be provided with a smooth, preferably substantially horizontal, object support surface V. During movement of the object transport unit along the path B, said support surface can for instance keep a particular orientation, for instance a substantially horizontal position. It is noted that each support surface V can also extend with a slight slant, at least relative to a virtually horizontal plane.

The support surface V can for instance comprise an uninterrupted top surface of the unit 4, for instance a plate surface, or be provided with recesses or passages, and comprise a grate surface or the like. The support surface V, on which one or more objects 3 can be borne, can also be designed in a different manner. The support surface V is preferably designed so smoothly that the objects 3 are slidable over this surface V in relatively easy manner in a transverse direction X, which is at right angles relative to a transport direction T (see Fig. 5).

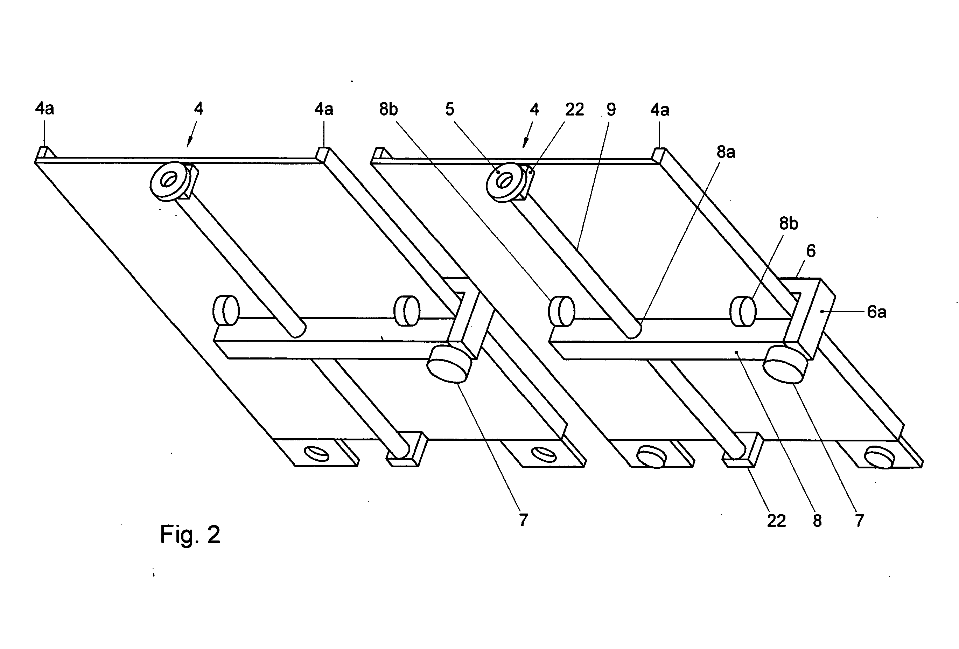

Each transport unit 4 is provided with one or two upward reaching side walls 4a, or upstanding edges 4a, which extend along the support surface V. Such upstanding edges 4a are represented in Figs. 1 and 2, and serve to prevent products from sliding from the transport unit 4 in a direction parallel to the transport direction T. The upstanding edges 4a of each unit 4 are parallel relative to each other.

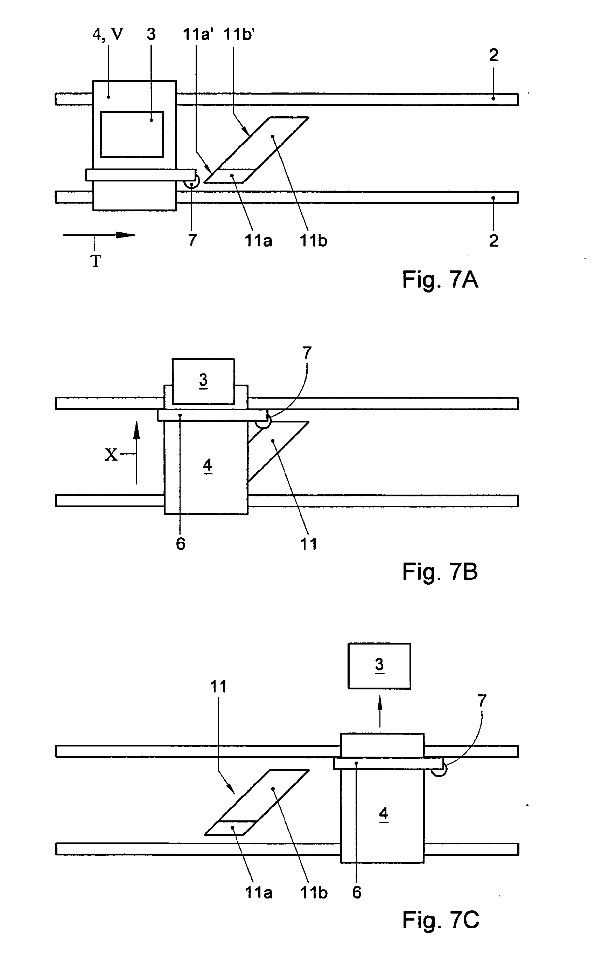

Each transport unit 4 is provided with an object pusher 6 movable along the support surface V between a first and second position, for pushing one or more objects 3 located, during use, on this surface V from this surface V, in particular in a transverse direction. The first position of the object pusher 6 is represented in Figs. 1- 6, 7A, 8A-8C. Figs 7B and 7C show the second position of the object pusher. In particular, a longitudinal side of the transport unit extending opposite the pusher 6 is open to the side, in order that, during use, the pusher 6 can push an object 3 away via the open longitudinal side (see Figs. 7A-7C). The object pusher extends in particular between the upstanding edges/sidewalls 4a, in particular at right angles between facing surfaces of the upstanding walls 4a.

Preferably, the object pusher 6 is a substantially rigid and elongated pusher element, for instance a push rod or push bar, which element extends preferably substantially parallel to the direction of travel T of the respective object transport unit 4. The object pusher serves in particular as slide, for sliding one or more objects (in particular each object) from the transport unit.

Further, in an advantageous manner, the transport system 1 is provided, at/near one or more desired path section, with object pusher moving means 11 which are designed for moving the object pusher 6 from the first position to the second position, relative to the respective object transport unit 4, under the influence of a movement of the respective object transport unit 4 along the transport path (at least, along the respective path section where these moving means 11 are provided). In other words: a movement of the respective object transport unit 4 along the transport path can automatically lead to (i.e. can be converted into) a movement of the object pusher 6. In particular each object pusher 6 is movable from its first position to its second position under the influence of an action force applied by the drive 19. Preferably, the object pusher moving means are arranged below the path of the object transport unit, as is the case in this exemplary embodiment.

The object pusher moving means 11 are further designed for mechanically cooperating with an operating part 7 of the object pusher 6 of an object transport unit 4 moving along or adjacent those moving means 11 such that this cooperation leads to the movement mentioned of the object pusher 6. Preferably, the moving means 11 are drivable for cooperation, as desired, with the operating part 7 mentioned.

With the exemplary embodiment, each object pusher 6 is provided with an operating part 7, which operating part 7 is engageable by the object pusher moving means 11, and is movable from a first to a second operating part position for moving the object pusher, during use, from the first to the second object pusher position. A first position of the object pusher operating part 7 is represented in Figs. 1-6, 7A, 8A-8C. Figs. 7B and 7C show a second position of this operating part. The first operating part position is for instance on or near a first longitudinal side of the transport unit 4 (as in Fig. 7A), and the second operating part position is on or adjacent a second longitudinal side of this unit 4 (as in Fig. 7B).

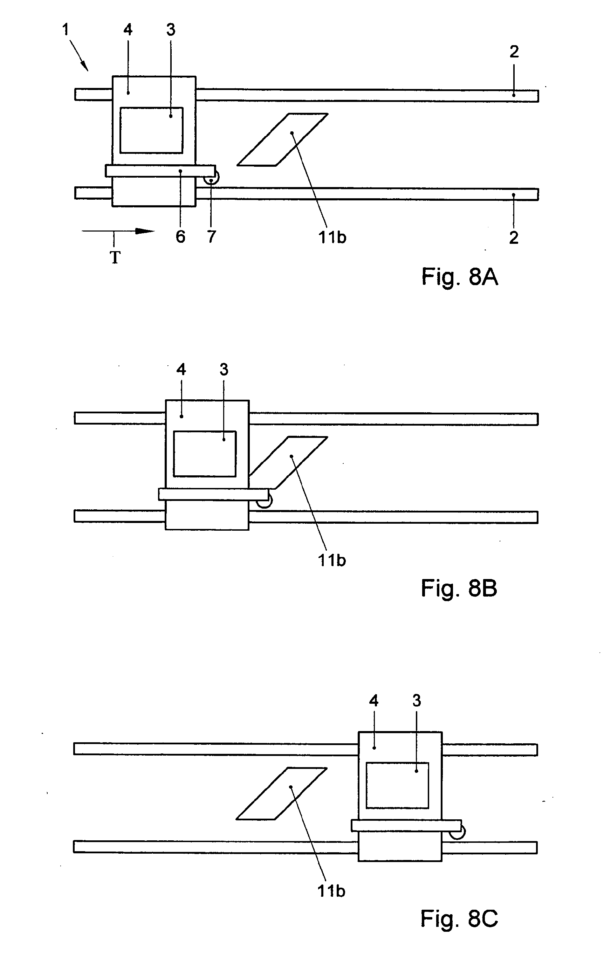

The object pusher moving means 11 are in particular provided with first engaging elements 11a that can be brought to a first position in a path of the operating part 7 for engaging this operating part 7, and to a second position for allowing this operating part 7 to pass, during movement along the transport path of the respective object transport unit 4. Figs. 7A-7C show the operation of the exemplary embodiment, when these first engaging elements 11a are in the first position, and Figs. 8A-8C the operation with the first engaging means 11a in the second position. A movement of a first engaging element 11a is schematically indicated with an arrow Q in Fig. 6. Movement of the first engaging element 11a can for instance be effected under the influence of a suitable actuator, for instance servo, linear motor, an electromagnetic actuator, pneumatic and/or hydraulic actuator means and/or the like.

Further, in the exemplary embodiment, each first engaging element 11a is associated with a second engaging element 11b such that during movement of the object transport unit, a first engaging element 11a located in its first position can move an operating part 7 from the first operating part position to a respective second engaging element 11b, and the second engaging element can take over the operating part 7 from the first engaging element 11a and thereupon move to the second operating part position.

These engaging elements 11a, 11b can be designed in different manners, and comprise guide plates, rods, push plates or suitable profiles, or be constructed otherwise, which will be clear to the skilled person.

As furthermore follows from the Figures, it is advantageous when the operating part 7 is provided with one or more respective guide surfaces, while the moving means 11 are provided with one or more respective guide surfaces, the operating part guide surfaces and moving means guide surfaces being designed for cooperation in a moved together position for moving the object pusher 6 under the influence of the movement of the respective object transport unit.

In the exemplary embodiment, the guide surfaces 11a', 11b' of the moving means 11 extend in a substantially slanting manner relative to a transport direction T. Each guide surface can extend for instance along a straight line, viewed in top plan view (see Figs. 5, 7-8), or along a curve, or be provided with straight and curved parts. Thus, an operating part 7, upon cooperation with the engaging means 11, can travel for instance a straight line, viewed in top plan view, or a curve, or a combination thereof, under the influence of the movement of the transport unit 4.

It is for instance advantageous if the object pusher moving means are designed for gradually accelerating and/or decelerating the object pusher, under the influence of a movement of the respective object transport unit 4 along the transport path. This can be achieved relatively simply when at least one or each lateral end part of a guide surface is provided with a suitable curve.

Preferably, at least one of the guide surfaces comprises a rollable or rotatable surface. The engaging elements 11a, 11b can for instance be provided with one or more rollable or rotatable surfaces, for instance of a roller track, for effecting guiding with relatively little friction. In that case, the rollable or rotatable surfaces can for instance form a roller track, which roller track extends along a suitable direction for guiding the operating part 7 therealong (for instance along a straight line, viewed in top plan view, or a curve, or a combination thereof).

However, with the exemplary embodiment, the engaging elements 11a, 11b are provided with guide surfaces 11a', 11b', stationary during use, which preferably extend substantially in vertical direction. When a first engaging element 11a is in its first position, it is preferred that the guide surface 11a' of that engaging element 11a' substantially links up without clearance with the guide surface 11b' of the associated second engaging element (see Figs. 5, 6, 7A-7C). When a first engaging element 11a is in its second position, the guide surface 11a' of this engaging element 11a' is at a distance from the guide surface 11b' of the associated second engaging element (see Figs. 6, 8A-8C).

Furthermore, each operating part 7 of the exemplary embodiment comprises a bearing roller 7, whose surface forms a rollable or rotatable guide surface. The object pusher moving means 11 are provided with a guide surface for guiding the bearing roller 7 from the first to second respective position during a movement of the respective object transport unit 4. An axis of rotation of the bearing roller 7 extends substantially at right angles relative to the direction of travel T of the respective object transport unit 4, and relative to the support surface V.

In this manner, the object pusher is simply provided with roller means 7, at least the bearing roller 7, which bearing roller forms a stop, with a rotatable stop surface (i.e. bearing surface), for moving the object pusher under the influence of a movement of the respective transport unit.

In an advantageous construction, as in the Figures, each object pusher 6 reaches substantially over the respective object support surface V, from a transverse side (at least transverse edge 4a) of the respective object transport unit 4. Said transverse side is in particular opposite a transverse side of a neighbouring transport tray 4. In the exemplary embodiment, the object pusher 6 is integrally provided with a bent over connecting piece 6a that reaches along the transverse side (in Figs. 1-2 an underside of this connecting piece 6a is at the same height as the underside of a guided element 8, and Fig. 6 shows an optional design with a connecting piece reaching downward - relative to element 8). An underside of the transport unit 4 remote from the object support surface V is preferably provided with a guide system 9 to which the connecting piece 6a of the object pusher 6 is coupled, the arrangement being such that the object pusher 6 is movable relative to the transporter 4 only between the respective first and second position. It is preferred that each object pusher 6 is movable only in a substantially lateral direction relative to a direction of travel T of the respective object transport unit 4.

The guide system 9 mentioned can be designed in different manners, and be provided with, for instance, one or more suitable slide bearings or the like. According to a simple, durable elaboration, this guide system 9 comprises a rigid guide 9, for instance a rod or ground shaft, which is fixedly connected by end faces to the transport unit 4, by means of, for instance, suitable suspension means 22, and extends, for instance, at a relative short distance below an underside of the transport unit 4. In particular, the guide 9 of the guide system extends at a longitudinal position (viewed in a transport direction, i.e. transport unit longitudinal direction) between the guide wheels 5. In the exemplary embodiment, the guide wheels 5 are also coupled to the suspension means 22. The object pusher 6 is provided with a rigid, guided element 8 that engages the guide 9 and cooperates therewith for allowing only the lateral movement of the object pusher. The guide element 8 is for instance provided with a passage 8a through which reaches the guide 9. Alternatively, the guide element 8 may be coupled, by means of a suitable (linear) bearings 21, to the guide 9 (as in Fig. 3). Preferably, the coupling between the guide 9 and the guide element 8 (for instance the bearings 21) is designed for substantially preventing or frustrating the horizontal pivoting of the guide element 8 relative to the guide 9 (at least a pivoting movement about a virtual pivot that proceeds perpendicularly to the support surface V).

In particular, the guide element 8 of the pusher 6 extends at right angles relative to the guide 9. It is further advantageous when, at the position of the pusher 6, the guide element 8 is aligned, at least such that this element 8 and the pusher 6 are crossed by the same virtual vertical plane. The guide element 8 can furthermore be provided with, for instance, rotatable support wheels 8b for supporting that element 8 in a rollable manner against an underside of the transport unit 4. The latter support wheels 8b (for instance supporting rollers) can be coupled to the guide element 8 in different manners, for instance through suitable suspensions (not represented), which will be clear to the skilled person. In particular, the guide 9 of the guide system extends between these support wheels 8b, at a distance from each of these wheels.

An object pusher operating part 7 (in particular bearing roller or wheel 7) can for instance be coupled for rotation to the guide element 8 or, alternatively to, for instance, the integral connecting piece 6a (for instance at an underside of the integral connecting piece 6a, as in, for instance, Figs. 1, 2 where that piece 6a is not lengthened downwards, or as in Figs. 5-8 where that piece 6a is indeed lengthened). In any case, in the exemplary embodiment, this operating part 7 is located below an underside of the guide element 8 and/or an underside of the bent over connecting piece 6a. The operating part 7 can also be provided at a different position suitable for object pusher operation.

During use, the positions of each guide system 9 and object pusher guide means 6a, 8 are such that these means 9, 6a, 8 cannot come into contact with the engaging elements 11 arranged below the path B.

The system can further be provided with a suitable transport system control C, provided with, for instance, at least one control hardware and control software, for controlling the system 1. The control can for instance be designed for regulating movement of the transport units 4, for instance via control of the drive 19, and for controlling the position of the first engaging elements 11a.

Figs. 5 - 8 show a use of the transport system, wherein for instance an object 3 is carried by the transport unit 4, while the unit 4 is moved by the drive 19, via the drive element 18, along its path B. Depending on the use, the object may have been brought onto the transport unit manually and/or by suitable transport means (not represented), which will be clear to the skilled person.

During use, the transport unit 4 can approach a path section that is provided with an engaging means assembly 11a, 11b, if the transport unit 4 travels in the transport direction T along the path B. A force for moving the transport unit is generated by the drive 19.

If it is desired to remove the object 3 from the transport unit 4 in the area at the respective path section that is associated with the engaging element assembly 11a, 11b, the first engaging element 11a of this assembly can simply be brought to the respective first position. As a result, the first engaging element 11a can engage the approaching bearing roller 7 of the object pusher 6 of the approaching object transport unit 4. Figs. 6 and 7A show in particular the associated, raised first position of the first engaging element 11a.

With a further movement along the respective path section, the object transport unit approaches the first engaging element 11a, and moves therealong. Here, the first, raised engaging element 11a will automatically engage the bearing roller 7 of the object pusher 6 and thus move the object pusher from the first object pusher position in the direction of the second object pusher position. Here, first, the bearing roller 7 rolls over the guide surface 11a' of the first engaging element, at least is pulled therealong, and thereupon rolls over - i.e. is pulled along - the guide surface 11b' of the adjacent second engaging element 11b (see Fig. 7B). Here, guiding of the bearing roller 7 is automatically taken over by the second engaging element 11b of the first engaging element.

As the bearing roller 7 is pulled along the guide surfaces 11', the object pusher 6 coupled to the bearing roller 7 is moved from its first position to the second position, and the object 3 is slid from the support surface V by the pusher 6. Hence, movement of the object pusher 6 is the direct result of the movement of the respective object transport unit 4. The object slid from the support surface can be received by receiving means (not represented), for instance discharge transport means, a discharge channel, sorting means, storing means, another transport system 1 and/or other object receiving means.

Owing to the configuration of the engaging element 11, and in particular owing to the shape of the respective guide surfaces 11a', 11b', the bearing roller 7 travels a substantially straight line, oblique relative to the transport direction, from the first to the second operating part position. In this manner, the object pusher moving means 11 are simply designed to move the object pusher at a substantially constant speed between its first and second position, when the respective object transport unit is moved at a constant speed.

When using differently formed guide surfaces 11a', 11b' the bearing roller can for instance be pulled along - preferably gradual - curves such that the object pusher 6 can gradually be accelerated towards its second position at the start of its transverse movement, and be decelerated again upon reaching its second position.

Optionally, an object pusher, after reaching the second position and having slid an object 3 from the transport unit 4, can be moved back to the first position. To this end, the system can for instance be provided with object pusher moving means (not represented) arranged below the path B, designed for moving the bearing roller 7 back to the first operating part position under the influence of a movement of the respective object transport unit 4.

In addition, the object transport unit 4 can be provided with spring means (not represented) that can apply a relatively low spring force on the object pusher 6, which spring force frustrates the movement from the first to the second object pusher position, for effecting the return movement of the object pusher 6. The spring force of such spring means which, in turn, can be designed in various manners, can then be overcome by the driving force of the drive 19 for the purpose of operating the object pusher 6.

If it is not desired to push the object 3 from the transport unit 4, the first engaging element 11a can be brought to its second position, or be held in this position, in order that the engaging element 11a cannot engage the approaching bearing roller 7 of the object pusher 6. The transport unit 4 can then move along the first engaging element 11a, without the first engaging element 11a engaging the bearing roller 7 of the object pusher 6, so that the object pusher 6 remains in its first position. This is represented in Figs. 8A-8C. In these Figures, the lowered first engaging element 11a is not visible. As shown in Figs. 8A-8C, the bearing roller 7 can move along the engaging element in an unhindered manner, as a result of the position of the first engaging element.

A first and second position of an object pusher 6 can be interchangeable, viewed relative to the respective object transport unit 4, as already mentioned hereinabove. It is for instance possible that the object pusher 6 is located adjacent a longitudinal side of the transport unit 4, on which longitudinal side also a drive element 18 engages, when the pusher is in the first position. In the alternative case, in its first position, the object pusher 6 can, conversely, be adjacent the other longitudinal side of the transport unit 4, at a distance from the drive element. Furthermore, during use, the first position of the object pusher 6 of one transport unit 4 can be alternated, if desired. The transport unit 4 can therefore be used for dispensing objects 3 each time only in the same respective transverse direction, or, if desired, also in a reversed transverse direction.

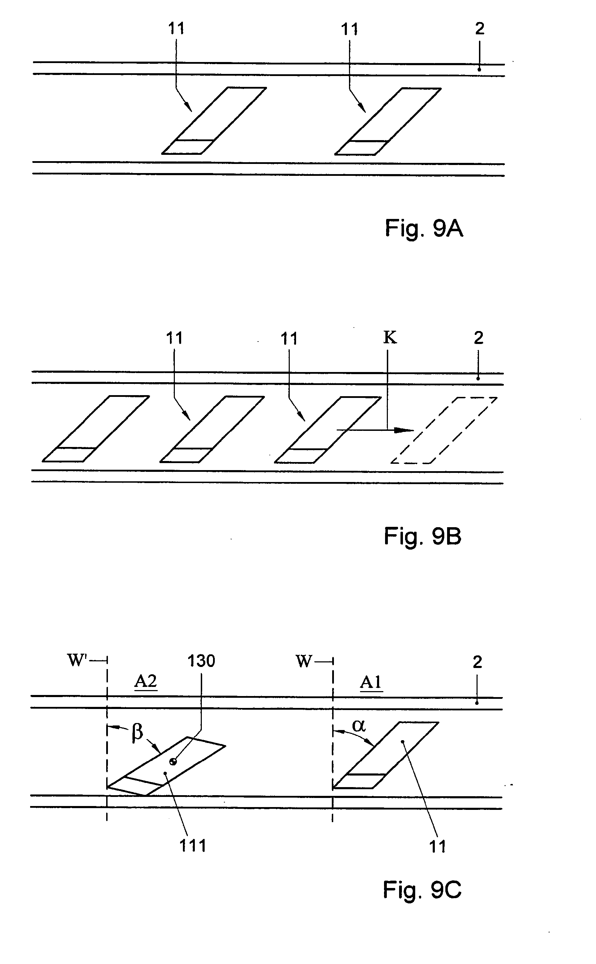

Figs. 9a - 9C show a few possible variants of the transport system. Fig. 9A shows a transport path B, which is provided with different object pusher moving means 11, which are at a relatively large distance from each other. In Fig. 9B, object pusher moving means 11 are provided at a mutually relative short distance. Preferably, the transport system is of modular design, while object pusher moving means 11 can be provided at different desired path positions (path sections) for the purpose of local cooperation with a pusher operating part of an approaching transport unit 4. Object pusher moving means 11 can for instance be coupled to the support construction F in a detachable or demountable manner.

In a further elaboration, object pusher moving means 11 are for instance movable along the path B to a desired operating position, which is schematically represented with an arrow K and in dotted lines in Fig. 9B.

According to one elaboration, at least a first path section A1 of the transport path B can be provided with associated first object pusher moving means 11, while a second path section A2 is provided with associated second object pusher moving means 111, the first object pusher moving means 11 being designed for moving an object pusher of an object transport unit moving along the first path section at a transport unit speed, at a first speed from a first to a second object pusher position, the second object pusher moving means 111 being provided for moving the object pusher of a object transport unit moving along the second path section at that transport unit speed, at a second speed, wherein the second object pusher speed differs from the first object pusher speed. This is schematically represented in Fig. 9C. In particular the first object pusher moving means 11, with guide surfaces 11', include a relatively small first angle α to a virtual transverse plane W of the path, which may lead to a relatively high speed of movement of the object pusher at a given path speed of the transport unit 4. The second object pusher moving means 111, with guide surfaces 111', enclose a relatively large second angle β (β > α) to a virtual transverse plane W' of the path, which may lead to a relatively low speed of movement of the object pusher at the given path speed of the transport unit 4.

It is further an option that the object pusher moving means be adjustable for setting an object pusher speed. The object pusher speed may therefore be variable. Setting the object pusher moving means can be done in various manners. According to a simple elaboration (see Fig. 9C), object pusher moving means 111 can for instance be pivotal about a virtual pivot 130 such that the angle β to the virtual transverse plane W' of the path can be set. Such a setting can for instance be carried out manually. Alternatively, drive means can for instance be provided for automatically adjusting the position of the object pusher moving means 111, for instance under the influence of the control C.

A transport system 1 according to the invention can transport relatively heavy objects particularly well and deliver them at desired path locations. The system is particularly durable, is therefore maintenance friendly and can be designed to be relatively compact and with relatively few parts.

The invention is not limited to the exemplary embodiments described. It will be clear to the skilled person that various modifications are possible within the framework of the invention as set forth in the following claims.

For instance, the bearing roller (also called slide bearing wheel) 7 can be located adjacent and/or below a transverse side of the object transport unit 4, for instance adjacent and/or below a bent over connecting piece 6a of the object pusher 6 (as in Figs. 1, 6), or for instance a position adjacent the guide system 9, or a different position. A guide bar 8 can also be located at different positions.

In addition, the bearing roller 7 can for instance be provided with an optional safety mechanism, for instance a swivelling mechanism or pivoting mechanism, for the purpose of safety. The swivelling or pivoting mechanism may be designed for pivoting away the travelling roller 7 under the influence of a particular, relatively high force applied by the object pusher moving means 11 on the roller 7, for instance away from the object pusher moving means 11 (such as sideways and/or up) for the purpose of machine safety. The roller 7 may be pivotal about a pivot, which pivot proceeds substantially at right angles (for instance horizontally) relative to a rotation axis of the roller 7. Spring means may be provided for frustrating such a pivotal movement of the travelling roller 7 by spring force, for bringing the bearing roller to its initial position, and keeping it in this initial position with a particular spring force. It will be clear that such a safety mechanism can also be implemented in various other manners.

## Claims

1. A transport system, provided with at least one object transport unit (4) guidable along a transport path (B) by guide means (2), wherein each transport unit (4) is provided with an object support surface (V) and with an object pusher (6) movable along this support surface (V) between a first and second position for pushing an object (3) located, during use, on this surface (V) from this surface (V), wherein the transport system (1) is provided with object pusher moving means (11) which are designed for moving the object pusher (6) from the first position to the second position, relative to the respective object transport unit (4), under the influence of a movement of the respective object transport unit (4) along the transport path, and **characterised in that**, the system comprising one or more of:
- tray-shaped object transport units (4), for instance transport trays; and
- object transport units which each comprise one or two upward reaching upstanding edges (4a), to prevent products from sliding from the transport unit (4) in a direction parallel to a transport direction (T).

2. A system according to claim 1, wherein each object pusher (6) is provided with or coupled to a respective operating part (7), which operating part (7) is engageable by the object pusher moving means (11), and is movable from a first to a second operating part position for moving the object pusher, during use, from the first to the second object pusher position.

3. A system according to claim 1 or 2, wherein the object pusher moving means (11) are designed for cooperating with an operating part (7) of the object pusher (6) of an object transport unit (4) moving along or adjacent those moving means (11), such that this cooperation leads to said movement of the object pusher (6).

4. A system according to claim 2 or 3, wherein the object pusher moving means (11) are provided with one or more first engaging elements (11a) that can be brought to a first position in a path of said operating part (7) for engaging this operating part (7), and to a second position for not engaging this operating part (7), during movement of the respective object transport unit (4) along the transport path.

5. A system according to claim 4, wherein at least one first engaging element (11a) is associated with a second engaging element (11b), such that, during movement of the object transport unit, a first engaging element (11a) located in its first position can move an operating part (7) from the first operating part position to a respective second engaging element (11b), and the second engaging element can take over the operating part (7) from the first engaging element (11a) and thereupon move it to the second operating part position.

6. A system according to any one of claims 2 - 5, wherein said operating part is provided with one or more respective guide surfaces, and said moving means (11) are provided with one or more respective guide surfaces, wherein the operating part guide surfaces and moving means guide surfaces are designed for cooperation in a moved together position for moving the object pusher (6) under the influence of the movement of the respective object transport unit, wherein at least one of the guide surfaces comprises a rollable or rotatable surface, in particular a bearing surface of a bearing roller (7).

7. A system according to any one of the preceding claims 2 - 6, wherein said operating part comprises a bearing roller (7), and the object pusher moving means (11) are provided with a guide surface for guiding the bearing roller (7) form the first to the second respective position during a movement of the respective object transport unit (4), wherein a rotation axis of the bearing roller (7) preferably extends substantially at right angles relative to a direction of travel of the respective object transport unit (4), wherein the bearing roller (7) is preferably located adjacent and/or below a transverse side of the respective transport unit.

8. A system according to any one of the preceding claims, wherein each object pusher (6) reaches substantially over the respective object support surface (V), from a transverse side of the respective object transport unit (4), wherein an underside of the transport unit (4) remote from the object support surface (V) is provided with a guide system to which the object pusher is coupled, the arrangement being such that the object pusher is movable only between the respective first and second position relative to the transport unit (4), wherein the object pusher (6) is preferably integrally provided with a bent over connecting piece (6a) that reaches along said transverse side.

9. A system according to any of the preceding claims, wherein the transport path comprises an endless path (B) closed upon itself, wherein the system is provided with different transport units (4) that are coupled to each other by means of an endless connecting means (18).

10. The system according to any of the preceding claims, comprising a drive (19) for advancing one or more drive element(s) (18) extending along the transport path (B), while each transport unit (4) is coupled to the drive element (18) so as to be pulled along the path (B) by this element.

11. The system according to claim 10, wherein the drive element comprises a chain, cord, belt, toothed belt, wire, or strip.

12. The system according to claim 10 or 11, provided with guide means for guiding the drive element as such along the transport path (B).

13. The system according to any of claims 10-12, wherein the drive element (18) is designed for keeping each transport unit (4) in a suitable transport position relative to transport unit guide means (2), for instance a substantially horizontal position.

14. The system according to any of the preceding claims, wherein each transport unit (4) is provided with one guide wheel (5) which cooperates with guide means (2), for rolling the transport unit (4) along the transport path (B).

15. A method for transporting objects, comprising the use of a transport system, for example a system according to any of the preceding claims, the system being provided with at least one object transport unit (4) guidable along a transport path (B) by guide means (2), wherein each transport unit (4) is provided with an object support surface (V) and with an object pusher (6) movable along this support surface (V) between a first and second position for pushing an object (3) located, during use, on this surface (V) from this surface (V), wherein the transport system (1) is provided with object pusher moving means (11) which are designed for moving the object pusher (6) from the first position to the second position, relative to the respective object transport unit (4), under the influence of a movement of the respective object transport unit (4) along the transport path,
wherein:
- at least one object transport unit (4) is moved forward along a transport path (B);
- an object (3) is carried on an object support surface (V) of the object transport unit (4); and
- an object pusher (6) of the object transport unit is moved from a first position to the second position for sliding the object (3) from the support surface (V),
wherein the movement of the object pusher (6) is the direct result of a movement of the respective object transport unit (4), wherein a said object is carried by only one said transport unit (4).

## Patentansprüche

1. Transportsystem, das mit mindestens einer Objekttransporteinheit (4) bereitgestellt ist, die durch Führungsmittel (2) entlang eines Transportweges (B) geführt werden kann, worin jede Transporteinheit (4) mit einer Objektträgeroberfläche (V) und mit einem Objektdrücker/-schieber (6) bereitgestellt ist, der entlang dieser Trägeroberfläche (V) zwischen einer ersten und zweiten Position bewegt werden kann, um ein Objekt (3), das sich während einer Verwendung auf dieser Oberfläche (V) befindet, von dieser Oberfläche (V) zu drücken, worin das Transportsystem (1) mit Objektdrückerbewegungsmitteln (11) bereitgestellt ist, die gestaltet sind, den Objektdrücker (6) unter dem Einfluss einer Bewegung der entsprechenden Objekttransporteinheit (4) entlang des Transportweges von der ersten Position zu der zweiten Position, relativ zu der entsprechenden Objekttransporteinheit (4) zu bewegen, und **dadurch gekennzeichnet, dass** das System eines oder mehreres umfasst von:
- wannenförmige Objekttransporteinheiten (4), beispielsweise Transportwannen, und
- Objekttransporteinheiten, die jeweils eine oder zwei nach oben reichende, aufrecht stehende Kanten (4a) umfassen, um Produkte daran zu hindern in einer Richtung parallel zu einer Transportrichtung (T) von der Transporteinheit (4) zu gleiten.

2. System nach Anspruch 1, worin jeder Objektdrücker (6) mit einem entsprechenden Betriebsteil (7) bereitgestellt oder daran gekoppelt ist, das mit dem Objektdrückerbewegungsmittel (11) in Eingriff stehen kann, und das während der Verwendung von einer ersten zu einer zweiten Betriebteilposition zum Bewegen des Objektdrückers von der ersten zu der zweiten Objektdrückerposition bewegt werden kann.

3. System nach Anspruch 1 oder 2, worin die Objektdrückerbewegungsmittel (11) gestaltet sind, mit einem Betriebsteil (7) des Objektdrückers (6) einer Objekttransporteinheit (4) zu kooperieren, das sich entlang oder angrenzend an diesem Bewegungsmittel (11) bewegt, so dass diese Kooperation zu der Bewegung des Objektdrückers (6) führt.

4. System nach Anspruch 2 oder 3, worin die Objektdrückerbewegungsmittel (11) mit einem oder mehreren ersten Eingriffselementen (11a) bereitgestellt werden, die zu einer ersten Position in einem Weg des Betriebsteils (7) gebracht werden können, um mit diesem Betriebsteil (7) in Eingriff zu stehen, und zu einer zweiten Position, um während einer Bewegung der entsprechenden Objekttransporteinheit (4) entlang des Transportweges nicht mit diesem Betriebsteil (7) in Eingriff zu stehen.

5. System nach Anspruch 4, worin mindestens ein erstes Eingriffelement (11a) mit einem zweiten Eingriffselement (11b) verbunden ist, so dass, während einer Bewegung der Objekttransporteinheit, ein erstes Eingriffelement (11a), das sich in dessen erster Position befindet, einen Betriebsteil (7) von der ersten Betriebsteilposition zu einem entsprechenden zweiten Eingriffelement (11b) bewegen kann, und das zweite Eingriffselement den Betriebsteil (7) von dem ersten Eingriffselement (11a) übernehmen kann, woraufhin das Betriebsteil zu der zweiten Betriebsteilposition bewegt wird.

6. System nach einem der Ansprüche 2 - 5, worin der Betriebsteil mit einer oder mehreren entsprechenden Führungsoberflächen bereitgestellt wird, und worin die Führungsmittel (11) mit einem oder mehreren entsprechenden Führungsoberflächen bereitgestellt sind, worin die Betriebsteilführungsoberflächen und Bewegungsmittelführungsoberflächen für eine Kooperation bei einer zusammen geführten Position gestaltet sind, den Objektdrücker (6) unter dem Einfluss der Bewegung der entsprechenden Objekttransporteinheit zu bewegen, worin mindestens eine der Führungsoberflächen eine rollfähige oder drehbare Oberfläche umfasst, insbesondere eine Lagerfläche eines Rollenlagers (7).

7. System nach einem der Ansprüche 2 - 6, worin der Betriebsteil ein Rollenlager (7) umfasst, und die Objektdrückerbewegungsmittel (11), mit einer Führungsoberfläche bereitgestellt sind, um während einer Bewegung der entsprechenden Objekttransporteinheit (4) das Rollenlager (7) von der ersten zu der zweiten entsprechenden Position zu führen, worin eine Drehachse des Rollenlagers (7) sich vorzugsweise im Wesentlichen relativ zu einer Bewegungsrichtung der entsprechenden Objekttransporteinheit (4) rechtwinklig erstreckt, worin das Rollenlager (7) vorzugsweise an und/oder unter einer transversalen Seite der entsprechenden Transporteinheit angrenzt.

8. System nach einem der vorstehenden Ansprüche, worin jeder Objektdrücker (6) im Wesentlichen über die entsprechende Objektträgeroberfläche (V) von einer transversalen Seite der entsprechenden Objekttransporteinheit (4) reicht, worin eine Unterseite der Transporteinheit (4), die von der Objektträgeroberfläche (V) entfernt liegt, mit einem Führungssystem bereitgestellt ist, an das der Objektdrücker gekoppelt ist, wobei die Anordnung derart gestaltet ist, dass der Objektdrücker lediglich zwischen der entsprechenden ersten und zweiten Position relativ zu der Transporteinheit (4) bewegt werden kann, und worin der Objektdrücker (6) vorzugsweise einstückig mit einem umgebogenen Verbindungsstück (6a) bereitgestellt wird, das sich an der transversalen Seite entlang erstreckt.

9. System nach einem der vorstehenden Ansprüche, worin der Transportweg einen in sich geschlossenen Endlosweg (B) umfasst, und worin das System mit unterschiedlichen Transporteinheiten (4) bereitgestellt ist, die durch ein Endlosverbindungsmittel (18) aneinander gekoppelt sind.

10. System nach einem der vorstehenden Ansprüche, das einen Antrieb (19) umfasst, um ein oder mehrere Antriebselement(e) (18) zu befördern, die sich entlang des Transportweges (B) erstrecken, während jede Transporteinheit (4) an das Antriebselement (18) gekoppelt ist, um so durch dieses Element entlang des Weges (B) gezogen zu werden.

11. System nach Anspruch 10, worin das Antriebselement eine Kette, ein Seil, ein Transportband, ein Zahnriemen, ein Draht oder ein Band ist.

12. System nach Anspruch 10 oder 11, das mit einem Führungsmittel bereitgestellt ist, um das Antriebselement als solches entlang des Transportweges (B) zu führen.

13. System nach einem der Ansprüche 10-12, worin das Antriebselement (18) gestaltet ist, jede Transporteinheit (4) in einer entsprechenden Transportposition relativ zu den Transporteinheitsführungsmitteln (2), beispielsweise in einer im Wesentlichen horizontalen Position, zu halten.

14. System nach einem der vorstehenden Ansprüche, worin jede Transporteinheit (4) mit einem Führungsrad (5) bereitgestellt ist, das mit Führungsmitteln (2) kooperiert, um die Transporteinheit (4) entlang des Transportweges (B) zu rollen.

15. Verfahren zum Transportieren von Objekten, umfassend die Verwendung eines Transportsystems, beispielsweise eines Systems nach einem der vorstehenden Ansprüche, wobei das System mit mindestens einer Transporteinheit (4) bereitgestellt ist, die durch Führungsmittel (2) entlang eines Transportweges (B) geführt werden kann, wobei jede Transporteinheit (4) mit einer Objektträgeroberfläche (V) und mit einem Objektdrücker (6) bereitgestellt ist, der entlang dieser Trägeroberfläche (V) zwischen einer ersten und zweiten Position bewegt werden kann, um ein Objekt, das sich während einer Verwendung auf dieser Oberfläche (V) befindet, von dieser Oberfläche (V) zu drücken, worin das Transportsystem (1) mit Objektdrückerbewegungsmitteln (11) bereitgestellt ist, die gestaltet sind, den Objektdrücker (6), unter dem Einfluss einer Bewegung der entsprechenden Objekttransporteinheit (4) entlang des Transportweges, von der ersten Position zu der zweiten Position relativ zu der entsprechenden Objekttransporteinheit (4) zu bewegen, wobei:
- mindestens eine Transporteinheit (4) entlang eines Transportweges (B) vorwärts bewegt wird;
- ein Objekt (3) auf einer Objektträgeroberfläche (V) der Objekttransporteinheit (4) transportiert wird; und
- ein Objektdrücker (6) der Objekttransporteinheit von einer ersten Position zu der zweiten Position bewegt wird, um das Objekt (3) von der Trägeroberfläche (V) zu schieben, wobei die Bewegung des Objektdrückers (6) ein unmittelbares Ergebnis einer Bewegung der entsprechenden Objekttransporteinheit (4) ist, wobei das Objekt lediglich durch eine der Transporteinheiten (4) transportiert wird.

## Revendications

1. Système de transport équipé d'au moins une unité de transport d'objet (4) susceptible d'être guidée le long d'un chemin de transport (B) par des moyens de guidage (2), dans lequel chaque unité de transport (4) est équipée d'une surface de support d'objet (V) et d'un organe pousseur d'objet (6) mobile le long de cette surface de support (V) entre une première et une deuxième position pour pousser un objet (3) situé, lors de son utilisation, sur cette surface (V) à partir de la cette surface, dans lequel le système de transport (1) est équipé de moyens de déplacement (11) de l'organe pousseur d'objet qui sont destinés à déplacer l'organe pousseur d'objet (6) de la première position à la deuxième position, par rapport à l'unité de transport d'objet (4) respective, sous l'influence d'un déplacement de l'unité de transport d'objet (4) respective le long du chemin de transport, et **caractérisé en ce que** le système comprend une ou plusieurs :
- unités de transport d'objet (4) en forme de plateau, par exemple plateaux de transport ; et
- unités de transport d'objet qui comprennent chacune une ou deux bordures (4a) hautes dirigées vers le haut, pour empêcher des produits de glisser à partir de l'unité de transport (4) dans une direction parallèle à une direction de transport (T).

2. Système selon la revendication 1, dans lequel chaque organe pousseur d'objet (6) est équipé de ou est accouplé à, une partie de commande respective (7), laquelle partie de commande (7) est susceptible d'être enclenchée avec le moyen de déplacement de l'organe pousseur d'objet (11), et est déplaçable d'une première à une seconde position de partie de commande pour déplacer l'organe pousseur d'objet, durant l'utilisation, de la première à la deuxième position de l'organe pousseur d'objet.

3. Système selon la revendication 1 ou 2, dans lequel les moyens de déplacement de l'organe pousseur d'objet (11) sont conçus pour coopérer avec une partie de commande (7) de l'organe pousseur d'objet (6) d'une unité de transport d'objet (4) se déplaçant le long ou à proximité des moyens de déplacement (11), de telle façon que cette coopération provoque ledit déplacement de l'organe pousseur d'objet (6).

4. Système selon la revendication 2 ou 3, dans lequel les moyens de déplacement de l'organe pousseur d'objet (11) sont équipés d'un ou plusieurs premier éléments d'enclenchement (11a) de manière à être amené dans une première position dans un chemin de ladite partie de commande (7) pour enclencher cette partie de commande (7), et dans une seconde position pour ne pas enclencher cette partie de commande (7) , durant le déplacement de l'unité de transport d'objet respective (4) le long du chemin de transport.

5. Système de transport selon la revendication 4, dans lequel au moins un premier élément d'enclenchement (11a) est associé avec un second élément d'enclenchement (11b), tel que, lors du déplacement de l'unité de transport d'objet, un premier élément d'enclenchement (11a) situé dans sa première position peut déplacer une partie de commande (7) de la première position de la partie de commande (7) au second élément d'enclenchement (11b) respectif, et le second élément d'enclenchement peut reprendre la partie de commande (7) à partir du premier élément d'enclenchement (11a) et sur ce le déplacer à la seconde position de partie de commande.

6. Système de transport selon l'une quelconque des revendications 2 à 5, dans lequel ladite partie de commande est équipée d'une ou plusieurs surfaces de guidage respective, et lesdits moyens de déplacement (11) sont équipés d'une ou plusieurs surfaces de guidage respective, dans lequel les surfaces de guidage de la partie de commande et les surfaces de guidage des moyens de déplacement sont adaptées à coopérer ensemble dans une position de rapprochement pour déplacer l'organe pousseur d'objet (6) sous l'influence du déplacement de l'unité de transport de l'objet respective, dans lequel au moins une des surfaces de guidage comprend une surface roulante ou rotative, en particulier une surface de roulement d'un galet de roulement (7).

7. Système selon l'une quelconque des revendications 2 à 6, dans lequel ladite partie de commande comprend un galet de roulement (7), et les moyens de déplacement de l'organe pousseur d'objet (11) sont équipés d'une surface de guidage pour guider le galet de roulement (7) d'une première à une seconde position respective durant un déplacement de l'unité de transport de l'objet respective (4), dans lequel un axe de rotation du galet de roulement (7) s'étend préférentiellement sensiblement à angle droit par rapport à la direction du déplacement de l'unité de transport de l'objet respective (4), dans lequel le galet de roulement (7) est préférablement situé de façon adjacente et/ou en dessous un côté transversal de l'unité de transport respective.

8. Système selon l'une quelconque des revendications précédentes, dans lequel chaque organe de pousseur d'objet (6) s'étend sensiblement par-dessus la surface de support d'objet respective, à partir d'un côté transversal de l'unité de transport d'objet respective (4), dans lequel une face inférieure de l'unité de transport (4) à distance de la surface de support d'objet (V) est équipée d'un système de guidage auquel l'organe pousseur d'objet est accouplé, l'agencement étant tel que l'organe pousseur d'objet est déplaçable seulement entre la première et la seconde position respective relatif à l'unité de transport (4), dans lequel l'organe pousseur d'objet (6) est de préférence intégralement équipé d'une pièce de raccord coudée (6a) qui s'étend le long dudit côté transversal.

9. Système selon l'une quelconque des revendications précédentes, dans lequel le chemin de transport comprend un chemin sans fin (B) fermé sur lui-même, dans lequel le système est équipé de différentes unités de transport (4) qui sont accouplées les une au autres par le biais de moyen de raccord sans fin (18).

10. Système selon l'une quelconque des revendications précédentes, comprenant un moyen d'entraînement (19) pour déplacer un ou plusieurs éléments d'entraînement(s) (18) s'étendant le long du chemin de transport (B), de même que chaque unité de transport est accouplée à un élément d'entraînement (18) de manière à ce qu'elle soit tirée le long du chemin (B) par cet élément.

11. Système selon la revendication 10, dans lequel l'élément d'entraînement comprend une chaîne, une corde, une courroie, une courroie crantée, un câble, ou une bande.

12. Système selon la revendication 10 ou 11, équipé d'un moyen de guidage pour guider l'élément d'entraînement le long du chemin de transport (B).

13. Système selon l'une quelconque des revendications 10 à 12, dans lequel l'élément d'entraînement (18) est destiné pour maintenir chaque unité de transport (4) dans une position de transport appropriée relative au moyen de guidage de l'unité de transport (2), par exemple une position sensiblement horizontale.

14. Système selon l'une quelconque des revendications précédentes, dans lequel chaque unité de transport (4) est équipée d'une roue de guidage (5) qui coopère avec le moyen de guidage (2), pour faire rouler l'unité de transport (4) le long du chemin de transport (B).

15. Procédé pour transporter des objets, comprenant l'utilisation d'un système de transport, par exemple un système selon l'une quelconque des revendications précédentes, le système étant équipé d'au moins une unité de transport d'objet (4) susceptible d'être guidée le long d'un chemin de transport (B) par des moyens de guidage (2), dans lequel chaque unité de transport (4) ) est équipée d'une surface de support d'objet (V) et d'un organe pousseur d'objet (6) mobile le long de cette surface de support (V) entre une première et une deuxième position pour pousser un objet (3) situé, durant l'utilisation, sur cette surface (V) à partir de la cette surface (V), dans lequel le système de transport (1) est équipé de moyens de déplacement (11) de l'organe pousseur d'objet qui sont conçus pour déplacer l'organe pousseur d'objet (6) de la première position à la deuxième positon, correspondant à l'unité de transport d'objet (4) respective, sous l'influence d'un déplacement de l'unité de transport d'objet (4) respective le long du chemin de transport,
dans lequel :
- au moins une unité de transport d'objet (4) est déplacée vers l'avant le long du chemin de transport (B)
- un objet (3) est transporté sur une surface de support d'objet (V) de l'unité de transport d'objet (4) ; et
- un organe pousseur d'objet (6) de l'unité de transport d'objet est déplacé d'une première position à une seconde position pour glisser l'objet (3) de la surface de support (V), dans lequel le déplacement de l'organe pousseur d'objet (6) est le résultat direct d'un déplacement de l'unité de transport d'objet (4), dans lequel ledit objet est transporté par seulement une desdits unités de transport (4).
